(19) Europäisches Patentamt

European Patent Office

Office européen des brevets

(11) Veröffentlichungsnummer: **0 298 370 B1**

# (12) EUROPÄISCHE PATENTSCHRIFT

(45) Veröffentlichungstag der Patentschrift: **02.12.92**

(21) Anmeldenummer: **88110462.4**

(22) Anmeldetag: **30.06.88**

(51) Int. Cl.⁵: **C08F 279/02**, C08F 279/04

(54) **Verfahren zur Herstellung einer schlagfesten thermoplastischen Formmasse und deren Verwendung.**

(30) Priorität: **08.07.87 DE 3722500**

(43) Veröffentlichungstag der Anmeldung:
**11.01.89 Patentblatt 89/02**

(45) Bekanntmachung des Hinweises auf die
Patenterteilung:
**02.12.92 Patentblatt 92/49**

(84) Benannte Vertragsstaaten:
**BE DE FR GB IT NL**

(56) Entgegenhaltungen:
US-A- 4 336 354
US-A- 4 522 983

(73) Patentinhaber: **BASF Aktiengesellschaft
Carl-Bosch-Strasse 38
W-6700 Ludwigshafen(DE)**

(72) Erfinder: **Bronstert, Klaus, Dr.
Gartenstrasse 26
W-6719 Carlsberg(DE)**
Erfinder: **Schwaben, Hans-Dieter, Dr.
Lindenstrasse 3
W-6721 Freisbach(DE)**
Erfinder: **Bueschl, Rainer, Dr.
Hollandstrasse 14
W-6701 Roedersheim-Gronau(DE)**
Erfinder: **Echte, Adolf, Dr.
Leuschnerstrasse 42
W-6700 Ludwighafen(DE)**

**Beschreibung**

Die Herstellung von schlagfesten Polystyrolen ist allgemein bekannt. Schlagfeste Polystyrole sind von großer wirtschaftlicher Bedeutung und werden insbesondere für die Herstellung von Gebrauchsgegenständen, z.B. Verpackungsmaterialien, Gehäuse für Elektrogeräte, Telefongehäuse, und Spielwaren verwendet. Insbesondere an den Glanz von Fertigteilen werden hohe Anforderungen gestellt. Bestehende Produkte besitzen hier Nachteile.

Von A. Echte, F. Haaf und J. Hambrecht, Angew.Chem. 93 (1981) S. 384 (Abb.22) wird darauf hingewiesen, daß der Glanz von Fertigteilen mit sinkender Teilchengröße steigt.

Sehr kleinteilige schlagfeste Polystyrole können unter Verwendung von Styrol-Butadien-Blockcopolymeren oder von Mischungen aus Homopolybutadien und Styrol-Butadien-Blockcopolymeren erhalten werden. Allerdings ist es in diesem Fall notwendig, pfropfaktive Radikalstarter zu verwenden.

In der EP-A-0 240 905 (Art 54(3) EPÜ) und EP-A-0 240 903 (Art. 54(3) EPÜ) werden Verfahren zur Herstellung kleinteiliger schlagfester Polystyrole beschrieben, bei denen Kautschuke mit Mercaptogruppen eingesetzt werden. In der EP-A-0 250 836 (Art. 54(3) EPÜ) wird die Herstellung schlagfester Formmassen unter Verwendung ionischer Vernetzer beschrieben.

Aufgabe der vorliegenden Erfindung war es, mit besonderen Elastomeren, die gut reproduzierbar und preiswert herzustellen sind und eine niedrige Lösungsviskosität aufweisen, schlagfeste Polystyrole oder ABS-Polymerisate herzustellen.

Es wurde gefunden, daß die Kautschukteilchen im schlagfesten Poylstyrol und im ABS weiter verkleinert werden können und so der Glanz erhöht werden kann, wenn zusätzlich zu den besonderen Elastomeren ein spezielles Copolymerisat (Komponente C) eingesetzt wird.

Die Erfindung betrifft daher ein Verfahren zur Herstellung einer schlagfesten thermoplastischen Formmasse, wobei man einen Reaktionsgemisch aus, jeweils bezogen auf A + B + C,

A  80 bis 96 Gew.% mindestens eines monovinylaromatischen Monomeren mit 8 bis 10 C-Atomen

B  mindestens 3 Gew.% eines Elastomeren mit einem Molekulargewicht von 30 000 bis 400 000 enthaltend Butadien oder Butadien und Styrol als Monomerbaustein, dessen Polymerketten in an sich bekannter Weise endständig mit primären Aminogruppen terminiert sind und

C  0,1 bis 10 Gew.% eines Copolymeren mit einem Molekulargwicht von 70 000 bis 300 000 mindestens eines vinylaromatischen Monomeren mit 8 - 10 C-Atomen und 0,5 bis 15 Gew.% Maleinsäureanhydrid bezogen auf C, das ebenfalls vor Beginn der Polymerisation zugegen ist,

in an sich bekannter Weise zu Produkten mit Zellenteilchenmorphologie polymerisiert, aufarbeitet und das Wertprodukt gewinnt.

Das erfindungsgemäße Verfahren ermöglicht die Herstellung von hochglänzenden schlagfesten Polystyrolen auf Basis von Homopolybutadienen oder Butadien/Styrol-Copolymerisaten mit Zellenteilchenmorphologie. Bei Mitverwendung von $\alpha,\beta$-ungesättigten Monomeren, z.B. insbesondere AN, werden ABS-Polymerisate mit sehr kleinen Teilchen zugänglich.

Nachstehend werden das erfindungsgemäße Verfahren und die zu seiner Durchführung erforderlichen Ausgangsstoffe näher beschrieben.

Verfahren zur Herstellung schlagfester Polystyrole sind dem Fachmann aus der DE-A-17 69 118, der EP-A-0 021 488, der DE-B-26 13 362, der DE-A-34 09 656 oder der DE-B-17 70 392 bekannt.

Das erfindungsgemäße Verfahren wird in Anlehnung an die bereits bekannten Verfahren vorzugsweise diskontinuierlich und in mindestens zwei Verfahrensstufen durchgeführt. In Anlehnung an das bekannte Verfahren, bei dem eine Lösung des kautschukartigen Polymerisates in z.B. Styrol und - wenn gewünscht - Acrylnitril unter Rühren vorpolymerisiert wird, wird erfindungsgemäß das kautschukartige Polymerisat zusammen mit der Komponente C, gelöst in dem vinylaromatischen Monomeren oder einer Mischung desselben mit dem $\alpha,\beta$-ungesättigten Nitril der Vorpolymerisation, zugeführt.

Die der Vorpolymerisation zugeführte Lösung wird als Reaktionsgemisch bezeichnet. Es enthält somit die Monomeren der Komponente A, das Elastomer B und das Copolymerisat C. Die Summe aus A + B + C soll 100 % betragen. Es können zusätzlich Regler, z.B. Mercaptane, Schmiermittel, und Stabilisatoren zugesetzt werden. Deren Anwendung richtet sich u.a. nach dem vorgesehenen Verwendungszweck.

Im Reaktionsgemisch sind, bezogen auf A + B + C, mindestens 3 Gew.%, vorzugsweise 4 bis 18 Gew.%, insbesondere 5 bis 16 Gew.% des Elastomeren B und 0,1 bis 10 Gew.%, bevorzugt 0,2 bis 9 Gew.% und insbesondere 0,5 bis 8 Gew.% der Komponente C enthalten.

Als Monomere (Komponente A) kommen Styrol, alkylsubstituierte Styrole oder Gemische davon in Betracht. Vorzugsweise wird ausschließlich Styrol verwendet. Auch Monomermischungen aus Styrol und $\alpha,\beta$-ungesättigten Nitrilen, wie Acrylnitril oder Methacrylnitril, können verwendet werden. Vorzugsweise wird Acrylnitril zusammen mit Styrol verwendet. Der Anteil von Acrylnitril beträgt, wenn Acrylnitril mitverwendet wird, 15 bis 40 Gew.%, vorzugsweise von 20 bis 35 Gew.%, bezogen auf Styrol.

Als Elastomeres B im Sinne des erfindungsgemäßen Verfahrens kommen Verbindungen in Frage, die durch anionische Polymerisation von Butadien oder Gemischen von Butadien und Styrol und Abbruch, z.B. mit 1,5-Diazabicyclo[3,1,0]hexan hergestellt wurden. Das Verfahren zur Herstellung dieser Produkte ist in der DE-A-35 27 909 ausführlich beschrieben. Die nach dem bekannten Verfahren durch Umsetzung des lebenden Anions erhältlichen Produkte (Ketten) werden als "Elastomere mit endständigen primären Aminogruppen terminiert" bezeichnet.

Das Molekulargewicht des Elastomeren B liegt im Bereich von 30 000 bis 400 000, vorzugsweise von 50 000 bis 300 000 und insbesondere von 60 000 bis 200 000, bestimmt mittels Gelpermeationschromatographie. Das Elastomere B kann ausschließlich aus endständig terminiertem Polybutadien bestehen; ein solches liegt vor, wenn das durch anionische Polymerisation von Butadien erhaltene Polymere mit einem Amin umgesetzt wird, so daß Gruppierung Polymerisat $-C-NH-CH_2 CH_2-CH_2-NH_2$ gebildet wird. Es ist bekannt, welche Copolymeren von Styrol und Butadien elastomer sind. Es können somit auch die verschiedensten Blockcopolymerisate von Butadien und Styrol, z.B. lineare, verzweigte, oder solche mit verschmiertem Übergang angewendet werden, sofern diese mit endständigen $NH_2$-Gruppen terminiert sind, wobei diese Endgruppe am Butadienyl- oder Styrylende sitzen kann.

Als Copolymerisat C wird ein vorzugsweise statistisch aufgebautes Copolymeres aus mindestens einem monovinylaromatischen Monomeren, mit 8 bis 10 C-Atomen, vorzugsweise von Styrol, mit Maleinsäureanhydrid verwendet, das bei Bedarf gegebenenfalls ein $\alpha,\beta$-ungesättigtes Nitril, vorzugsweise Acrylnitril, enthält. Der Anteil des Anhydrids am Copolymeren beträgt 0,5 bis 15 Gew.%, vorzugsweise 1 bis 10 Gew.% und insbesondere 1 bis 5 Gew.%. Der Anteil des Nitrils liegt gegebenenfalls im Bereich von 15 bis 40 Gew.%, vorzugsweise von 20 bis 35 Gew.%.

Das Molekulargewicht (Viskositätsmittel) des Copolymerisats C liegt zwischen 70 000 und 300 000, vorzugsweise zwischen 80 000 und 250 000 und insbesondere zwischen 80 000 und 250 000. Es wird in bekannter Weise durch radikalische Polymerisation in Masse oder Lösung erhalten. Geeignete Verfahren sind bekannt (vgl. z.B. US-A 4 551 510 und B.C. Triveal and B.M. Culbertson in der Publikation "Maleinic Anhydride" Chapter 9, 10 and 11, Plenum Press, New York [1982]), so daß es weiterer Erläuterungen nicht bedarf.

Bei dem erfindungsgemäßen Verfahren wird in erster Stufe vorzugsweise thermisch gearbeitet. Man kann aber auch in Gegenwart von peroxidischen Radikale bildenden Initiatoren polymerisieren, was von der Art der verwendeten Monomeren abhängt. Die Unterschiede der beiden Verfahrensvarianten sind bekannt. Als Initiatoren kommen Alkyl- oder Acylperoxide, Perester oder Peroxidicarbonate in Betracht. Vorzugsweise werden die pfropfaktiven Initiatoren Dibenzoylperoxid, t-Butylperoxi-2-ethyl-hexanoat oder t-Butylperbenzoat angewendet, in Mengen von ca. 0,02 bis 0,2 Gew.%, bezogen auf die Monomeren.

Das erfindungsgemäße Verfahren wird vorzugsweise in Gegenwart von Kettenüberträgern, wie z.B. Mercaptanen, insbesondere n-Butylmercaptan, n- oder t-Dodecylmercaptan, durchgeführt. Die Mercaptane werden in Mengen von 0,01 bis 0,2 Gew.% bezogen auf die Monomeren angewendet.

Das erfindungsgemäße Verfahren kann auch in Gegenwart von Schmiermitteln, insbesondere von medizinischen Weißölen, die den lebensmittelrechtlichen Bestimmungen für den Verpackungssektor genügen, durchgeführt werden.

Auch Stabilisatoren können während der Polymerisation zugegen sein. In Betracht kommen vor allem die dem Fachmann bekannten sterisch gehinderten Phenole in üblichen Mengen.

Die Polymerisation kann kontinuierlich oder (bevorzugt) diskontinuierlich durchgeführt werden. Das kontinuierliche Verfahren ist in DE-AS 17 70 392, das diskontinuierliche in DE-AS 26 13 352 hinreichend beschrieben, so daß der Verweis auf diese Druckschriften genügen mag.

Bei dem erfindungsgemäßen Verfahren wird in der ersten Stufe innerhalb von 3 bis 6 Stunden bis zu einem Umsatz von 10 bis 40 %, vorzugsweise 25 bis 35 %, bezogen auf die Monomeren (das Monomere) bei Temperaturen von 50 bis 200°C in Masse polymerisiert. Die während dieser Vorpolymerisation ablaufenden Vorgänge, wie Zweiphasigkeit, Phaseninversion, und Einstellung der Teilchengröße durch entsprechende Scherbedingungen sind in der vorstehend erwähnten Publikation Angewandte Chemie loc. cit. ausführlich beschrieben.

Das Reaktionsprodukt dieser ersten Stufe wird nun in einer zweiten Stufe vorzugsweise in wäßriger Suspension bis zu einem Umsatz von 95 bis 100 % zu Ende polymerisiert und in bekannter Weise wird das Wertprodukt im Anschluß an die Polymerisation gewonnen. Dies kann z.B. durch Entgasung auf einem Entgasungsextruder geschehen, in dem das Reaktionsprodukt von überschüssigem Styrol (und gegebenenfalls AN) befreit wird.

Die nach dem erfindungsgemäßen Verfahren erhaltenen schlagfesten Polystyrole besitzen Zellenteilchen mit mittleren Durchmessern im Bereich von 0,3 bis 1,0 $\mu$m, vorzugsweise 0,35 bis 0,8 $\mu$m ($d_{50}$-Werte)

und können nach den für Thermoplaste bekannten Verfahren verarbeitet werden. ABS-Polymerisate mit mittleren Teilchengrößen von 0,2 bis 1,0 $\mu$m, vorzugsweise 0,25 bis 0,8 $\mu$m sind herstellbar. Insbesondere auch für die Verarbeitung der nach dem erfindungsgemäßen Verfahren erhaltenen Wertprodukte kann der Fachmann übliche Zusatzstoffe verwenden. Als solche seien genannt: Farbstoffe, Antistatika und Flammschutzmittel in den dem Fachmann bekannten Mengen.

Die nach dem erfindungsgemäßen Verfahren erhaltenen Produkte können nach den bekannten Verfahren der Thermoplastverarbeitung bearbeitet werden, also z.B. durch Extrudieren, Spritzgießen, Kalandrieren, Hohlkörperblasen, Pressen oder Sintern. Bevorzugt werden aus den nach dem erfindungsgemäßen Verfahren hergestellten Formmassen durch Spritzgießen Formteile, z.B. auch für den Automobilbau, hergestellt.

Die in den Beispielen und den Vergleichsversuchen beschriebenen Parameter (s. Tabelle) wurden wie folgt bestimmt:

1. Lochkerbschlagzähigkeit, $a_{KL}$, in KJ/m$^2$ nach DIN 53 753

2. Reißdehnung, RD, in % nach DIN 53 455

3. Streckspannung, ST, in N/mm$^2$ nach DIN 53 455

4. Der Glanz wurde an spritzgegossenen Testkästchen in der Form eines Pyramidenstumpfes mit rechteckiger Grundfläche mittels eines Labor-Reflektometers der Fa. Lange bei einem Einfallswinkel von 45° gemessen. Diese Art der Glanzmessung ist eine Relativmessung. Seine Einheit wird in Skalenteilen (SKT) bezogen auf einen von der Fa. Lange mitgelieferten Standard angegeben. Als Bedingungen für den Spritzguß wurden eine Masse-(Kunststoff)-Temperatur von 280°, eine Formtemperatur von 40°C und eine Einspritzzeit von 0,6 s gewählt.

5. Von den Produkten der Beispiele und von der Vergleichsprobe wurden in bekannter Weise elektronenmikroskopische Dünnschichtaufnahmen angefertigt, die zur Bestimmung der Teilchengröße und Verteilung der Weichphase dienten.

Die Bestimmung geschah mit Hilfe der Bildanalyse nach dem Verfahren wie es von W. Alex in Zeitschrift für Aufbereitung und Verfahrenstechnik 13, (1972) im Kap. 3.11 beschrieben ist. Die Zahl der ausgewerteten Teilchen lag zwischen 4000 und 9500.

Bei der Angabe der mittleren Teilchengröße handelt es sich in allen Fällen um das Volumenmittel der Teilchengröße. Die Bildanalyse liefert die integrale Volumenverteilung des Teilchendurchmessers einer Probe. Hieraus läßt sich entnehmen, wieviel Volumenprozent der Teilchen einen Durchmesser gleich oder kleiner einer bestimmten Größe haben. Der mittlere Teilchendurchmesser, der auch als $d_{50}$-Wert der integralen Volumenverteilung bezeichnet wird, ist dabei als der Teilchendurchmesser definiert, bei dem 50 Vol.% der Teilchen einen kleineren Durchmesser haben als der Durchmesser, der dem $d_{50}$-Wert entspricht. Ebenso haben dann 50 Vol% der Teilchen einen größeren Durchmesser als dem $d_{50}$-Wert entspricht. Zur Charakterisierung der Teilchengrößenverteilung der Kautschukteilchen werden neben dem $d_{50}$-Wert (mittlerer Teilchendurchmesser) die sich ebenfalls aus der integralen Volumenver-teilung ergebenden $d_5$- und $d_{95}$-Werte herangezogen. Der $d_5$- bzw. $d_{60}$-, $d_{90}$- und der $d_{95}$-Wert der integralen Volumenverteilung ist dabei entsprechend dem $d_{50}$-Wert definiert mit dem Unterschied, daß sie auf 5, 60, 90 bzw. 95 Vol.% der Teilchen bezogen sind.

Zur Durchführung der Beispiele und für Vergleichszwecke wurde ein Polybutadien verwendet, das mit Aminogruppen endständig terminiert ist und nach Beispiel 3 der DE-OS 35 27 909 hergestellt wurde. Das mittlere Molekulargewicht (Gewichtsmittel) betrug 85 000.

Als Komponente C wurde entweder ein statistisch aufgebautes Copolymerisat aus 97,5 Teilen Styrol und 2,5 Teilen Maleinsäureanhydrid (MSA) mit einer Viskositätszahl von 73 ml/g in Toluol eingesetzt, oder es wurde ein statistisch aufgebautes Terpolymerisat aus 75 Gew.% Styrol, 24 Gew.% Acrylnitril und 1 Gew.% MSA mit einer Viskositätszahl von 78,6 ml/g in Dimethylformamid verwendet.

Die nachfolgenden Beispiele und der Vergleichsversuch sollen die Erfindung näher erläutern. Die angegebenen Teile und Prozente beziehen sich dabei auf das Gewicht.

Beispiel 1

In einem mit einem Ankerrührer ausgestatteten Autoklaven mit einem Fassungsvermögen von 5 Litern wurden 91,05 Teile Styrol, 8,0 Teile des aminoterminierten Polybutadiens, 0,75 Teile des Styrol/MSA-Copolymeren, 0,1 Teile eines sterisch gehinderten Phenols als Stabilisator (Irganox 1076) und 0,1 Teile t-Dodecylmercaptan gegeben. Diese Mischung wurde 12 Stunden bei 25°C mit 100 Rührerumdrehungen pro Minute gerührt. Daran anschließend wurde die Rührerdrehzahl auf 200 eingestellt, die Temperatur auf 123°C gebracht und dann bei dieser Temperatur bis zu einem Umsatz von 35 %, bezogen auf Styrol, polymerisiert.

Danach wurde in wäßriger Suspension weiterpolymerisiert. Hierzu werden 0,1 Teile Dicumylperoxid und pro kg des Ansatzes 900 ml Wasser, 9,0 g eines Suspensionshilfsmittel auf Basis von Polycinylpyrrolidon und 0,9 g Natriumpyrophosphat zugegeben. In Suspension wird bei 300 Rührerumdrehungen pro Minute jeweils isotherm 6 Stunden bei 130°C und 6 Stunden bei 140°C bis zu einem Umsatz von mehr als 99 %, bezogen auf Styrol, polymerisiert.

Das in Perlenform anfallende Produkt wird mit Wasser gewaschen und bei 60°C und 14 mbar in 15 Stunden getrocknet. Wie die in der Tabelle aufgeführten Resultate der Prüfungen zeigen, besitzt dieses Produkt einen hohen Glanz und eine gute mechanische Festigkeit.

Beispiel 2

Es wurde, wie in Beispiel 1 erläutert, verfahren, jedoch mit 8,0 Teilen des Styrol/MSA-Copolymeren und 83,8 Teilen Styrol, unter Beibehaltung der Anteile der übrigen Einsatzstoffe wurde ebenfalls ein Produkt mit guter mechanischer Festigkeit und hohem Glanz erhalten.

Vergleichsversuch

Auf die gleiche Art und Weise, wie in Beispiel 1 beschrieben, jedoch ohne Verwendung des Copolymeren aus Styrol und MSA wird ein Produkt mit mäßigem Glanz und mäßigem mechanischen Festigkeitsniveau erhalten.

Tabelle

|  | $d_{50}$-Wert | Glanz | aKL | ST | RF | RD |
|---|---|---|---|---|---|---|
| Beispiel 1 | 0.39 | 78 | 7.2 | 28.6 | 25.3 | 12 |
| Beispiel 2 | 0.68 | 73 | 7.9 | 26.5 | 23.7 | 14 |
| Vergleichsversuch | 0.92 | 65 | 5.3 | 20.1 | 17.9 | 6 |

Beispiel 3

Wie in Beispiel 1 erläutert wurde ein Reaktionsansatz, bestehend aus 66,0 Teilen Styrol, 22,0 Teilen Acrylnitril, 8,0 Teilen des aminoterminierten Polybutadiens, 4,0 Teilen des Terpolymerisates, 0,1 Teilen Dibenzoylperoxid und 0,1 Teilen t-Dodecylmercaptan bei 86°C bis zu einem Umsatz von 33 %, bezogen auf die Summe aus Styrol und Acrylnitril, vorpolymerisiert. Danach wurde wie in Beispiel 1 beschrieben in Suspension auspolymerisiert. Es wurde ein Produkt erhalten mit einem $d_{50}$-Wert von 0,35 Mikrometern, einem Glanz von 79 SKT, einer aKL von 6,1 kJ/m, einer ST von 36,6 N/mm, einer RF von 34,0 N/mm und einer RD von 5 %.

Dieses Beispiel belegt, daß auch bei der Verwendung von Monomerengemischen kleinteilige, hochglänzende ABS-Produkte erhalten werden.

**Patentansprüche**

1.   Verfahren zur Herstellung einer schlagfesten thermoplastischen Formmasse, wobei man ein Reaktionsgemisch aus, jeweils bezogen auf A + B + C,
     A     80 bis 96 Gew.% mindestens eines monovinylaromatischen Monomeren mit 8 - 10 C-Atomen,
     B     mindestens 3 Gew.% eines Elastomeren mit einem Molekulargewicht von 30 000 bis 400 000 enthaltend Butadien oder Butadien und Styrol als Monomerbaustein, dessen Polymerketten in an sich bekannter Weise endständig mit primären Aminogruppen terminiert sind und
     C     0,1 bis 10 Gew.% eines Copolymeren mit einem Molekulargwicht von 70 000 bis 300 000 mindestens eines vinylaromatischen Monomeren mit 8 - 10 C-Atomen und 0,5 bis 15 Gew.% Maleinsäureanhydrid bezogen auf C, das ebenfalls vor Beginn der Polymerisation zugegen ist, in an sich bekannter Weise zu Produkten mit Zellen teilchen morphologie polymerisiert, aufarbeitet und das Wertprodukt gewinnt.

2.   Verfahren nach Anspruch 1, dadurch gekennzeichnet, daß das Reaktionsgemisch übliche Hilfsmittel enthält.

**3.** Verfahren nach Anspruch 1, dadurch gekennzeichnet, daß das Reaktionsgemisch neben dem monovinylaromatischen Monomeren 15 bis 40 Gew.%, bezogen auf A, eines α, β-ungesättigten Nitrils enthält.

## Claims

**1.** A process for the preparation of an impact-resistant thermoplastic molding material, in which a reaction mixture comprising, based in each case on A + B + C,

    A    from 80 to 96% by weight of one or more monovinylaromatic monomers of 8 to 10 carbon atoms,

    B    not less than 3% by weight of an elastomer having a molecular weight of from 30,000 to 400,000 containing butadiene or butadiene and styrene as a monomer building block, the polymer chains of which are terminated in a conventional manner by terminal primary amino groups, and

    C    from 0.1 to 10% by weight of a copolymer, having a molecular weight of from 70,000 to 300,000, of one or more vinylaromatic monomers of 8-10 carbon atoms and from 0.5 to 15% by weight of maleic anhydride based on C, which is likewise present before the beginning of the polymerization,

is polymerized in a conventional manner to give products having cellular particle morphology and worked up, and the desired product is obtained.

**2.** A process as claimed in claim 1, wherein the reaction mixture contains conventional assistants.

**3.** A process as claimed in claim 1, wherein the reaction mixture contains from 15 to 40% by weight, based on A, of an α,β-unsaturated nitrile in addition to the monovinylaromatic monomer.

## Revendications

**1.** Procédé de préparation d'une masse à mouler thermoplastique résistante au choc, dans lequel on polymérise de façon connue en soi, en produits à morphologie cellulaire des particules, un mélange réactionnel composé, chaque fois par rapport à A + B + C,

    A    de 80 à 96% en poids d'au moins un monomère monovinylaromatique à 8-10 atomes de carbone,

    B    d'au moins 3% en poids d'un élastomère d'un poids moléculaire de 30 000 à 400 000, contenant du butadiène ou du butadiène et du styrène comme éléments structuraux monomères, élastomère dont les chaînes polymères se terminent en fin de chaîne, de façon connue en soi, par des groupements amine primaire, et

    C    de 0,1 à 10% en poids d'un copolymère, ayant un poids moléculaire de 70 000 à 300 000, d'au moins un monomère vinylaromatique à 8-10 atomes de carbone et de 0,5 à 15% en poids d'anhydride maléique par rapport à C, ce copolymère étant également présent avant le début de la polymérisation,

on soumet le polymère à un traitement ultérieur et on récupère le produit de valeur.

**2.** Procédé selon la revendication 1, caractérisé en ce que le mélange réactionnel contient les adjuvants usuels.

**3.** Procédé selon la revendication 1, caractérisé en ce que le mélange réactionnel contient, en dehors du monomère monovinylaromatique, de 15 à 40% en poids, par rapport à A, d'un nitrile α,β-insaturé.